# EUROPÄISCHE PATENTANMELDUNG

(11) **EP 1 626 527 A1**
(43) Veröffentlichungstag der Anmeldung: **15.02.2006**
(21) Anmeldenummer: 04018875.7
(22) Anmeldetag: 09.08.2004
(51) Int. Cl.: H04L 12/26, H04L 12/24

(54) **Automatisch aktivierte Qualitätsmessung**

(71) Anmelder: SIEMENS AKTIENGESELLSCHAFT, 80333 München (DE)
(72) Erfinder: Boll, Norbert, 81245 München (DE); Rosner, Sönke, 82008 Unterhaching (DE)

(57) **Zusammenfassung**

Nach Erkennen einer Störung wird automatische die Ermittlung von Daten D_{PM}, die Rückschlüsse auf die Ursache der Störung ermöglichen, aktiviert. Die Ursache der Störung wird anschließend von einer Diagnoseappliaktion ILDA unter Berücksichtigung der Daten ermittelt. Bevorzugt wird die Ermittlung der Daten automatisch unter Berücksichtigung einer konfigurierbaren Zeitbegrenzung oder nach einem fixen Zeitraum deaktiviert.

Vorteilhaft wird die Aktivierung der Datenermittlung mit dem Auftritt der Störung zeitnah verknüpft, so dass für die Ermittlung der Ursache besonders aussagekräftige Daten D_{PM} ermittelt werden.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB ganannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Desweiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse bewirkt, die beispielsweise als Netzelement (NE), Operations System (OS), Anwendung (= Applikation), Terminal, Router, Switch, Datenbankserver oder Computerprogramm (d.h. genauer: Computerprogrammerzeugnis = (engl.) "computer program product") ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Zwischen NE und OS kann ein Data Communication Networks (DCN) zur Übermittlung von Informationen vorgesehen sein. Die Übermittlung folgt den Prinzipien des Transportdienstes, so wie er in den unteren Schichten des ISO/OSI Referenzmodells im internationalen Standard X.200 beschrieben ist.

Ein OS kann mehrere Programme - auch Applikationen oder Software genannt - umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezfische Teilmenge der Resourcen des Netzes modelliert, visualisiert und gesteuert wird.

Die Programme werden von Hardware (z.B. Prozessor, i/o Baugruppe) ausgeführt, die in den Erzeugnissen vorgesehen ist. Diese Ausführung wird von Supportsoftware (z.B. Multitasking bzw. Multithreading Betriebssystem, Datenbanksystem, Windows System) unterstützt.

Die Performance Funktionalität wird in den Erzeugnissen beispielsweise dadurch realisiert, dass zunächst qualitätsrelevante Daten wie z.B. Qualitäts- und/oder Protokolldaten auf physikalischer Schicht (z.B. Teilnehmerschnittstelle) bzw. logischer Schicht (z.B. IP, ATM) oder Messdaten von der Leitungsüberwachung der Teilnehmerschnittstelle in den Netzelementen erfasst werden. Diese Daten werden anschließend über das DCN an das OS übermittelt und dort in zumindest eine Anwendung zur genauen Ermittlung der Fehlerursache bzw. zur Analyse der Leistungseinschränkung (z.B. eine Applikation ILDA = Intelligent Line Diagnostic Application) eingebunden.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Die Datenerfassung ist wegen der dabei anfallenden Datenmengen sehr häufig nicht aktiviert. Die Qualitäts/Protokolldaten und die Messdaten der Leitungsüberwachung können deshalb häufig nicht in eine zeitlich spätere Fehlerursache- und Analyse-Prozedur durch eine Applikation zur genauen Fehlerursache und Analyse der Qualitätseinschränkung aufgenommen werden, wenn die Qualitäts- und Protokolldatenerfassung zum Zeitpunkt der Qualitätsreduzierung nicht aktiviert war, bzw. eine Abfrage und Speicherung der Messdaten der Leitung nicht durchgeführt wurde.
- Die Qualitäts- und Protokolldatenerfassung kann nur auf Bedieneranforderung im Netzelement (z.B. DSLAM) gestartet werden. Eine gleichzeitige Erfassung der Qualitäts/Protokolldaten eines Netzelementes im Vorfeld ist aus Gründen der Speicherkapazität und der Leistungsfähigkeit des Netzelementes problematisch. Selbst falls die Speicherkapazität und die Leistungsfähigkeit des Netzelementes ausreichend wäre, würde das Auslesen und Auswerten aller Daten unnötige Netz- und Rechenkapazitäten verbrauchen.
- Die Erfassung der Messdaten der Leitungsüberwachung erfolgt auf Bedieneranforderung und ergibt immer nur eine Momentaufnahme der Messwerte zum aktuellen Zeitpunkt. Somit erfolgt wegen des manuellen Bedieneingriffs die Erfassung der Daten meist zum falschen Zeitpunkt, so dass die Einbeziehung dieser wichtigen Daten für eine zeitlich spätere Fehlerursache- und Analyse-Prozedur selten oder gar nicht möglich ist, weil die Daten nicht vorliegen.

Eine Lösung für diese erfindungsgemäß erkannte Problemsituation sowie vorteilhafte Ausgestaltungen dieser Lösung sind in den Patentansprüchen angegeben.

Die Erfindung wird nachfolgend anhand von Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:

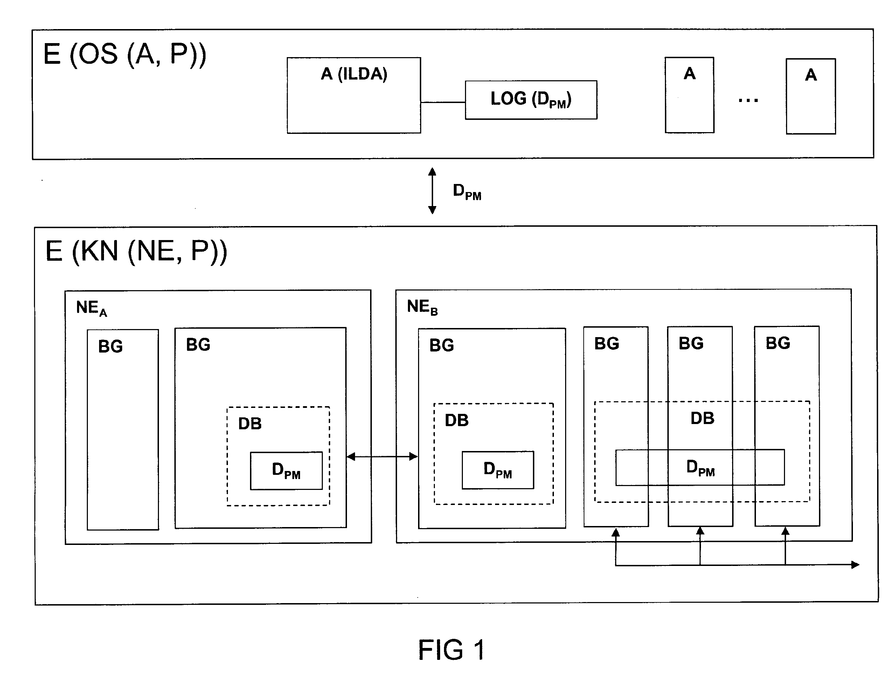

- Figur 1: eine beispielhafte Anordnung, umfassend ein zentrales Operations System OS mit Applikationen A zur Steuerung von dezentralen Elementen NE eines Kommunikationsnetzes KN

Die Ausführung der Erfindung wird im weiteren auch mit Hilfe der Figur 1 dargestellten Anordnung erklärt, die eine Vielzahl von verteilt angeordneten gegenständlichen Erzeugnissen E umfasst. Die Erzeugnisse E sind beispielsweise als dezentral verteilt angeordnete Netzelemente NE_{A}, NE_{B} eines Kommunikationsnetzes KN oder als zentrales Operations System OS mit Applikationen A zur Steuerung der dezentralen Elementen NE des Kommunikationsnetzes KN ausgebildet. Zumindest eine der Applikationen A ist beispielsweise als Applikation ILDA (= Intelligent Line Diagnostic Application) zur intelligenten Diagnose von Störungen des Kommunikationsnetzes KN ausgebildet.

Die Erzeugnisse E umfassen Hardware - insbesondere Prozessoren und Speichermittel -, mit deren Hilfe insbesondere diejenigen Erzeugnisse E durchgeführt werden, die als Computerprogrammprodukt P bzw. als Programm P ausbildet sind. Die Hardware kann auch unmittbar den Erzeugnissen E entsprechen, beispielsweise als Application Specific Integrated Circuit (ASIC) oder gleichwertiges gegenständliches Erzeugnis E.

Den als Applikationen A ausgebildeten Erzeugnissen können die TMN Funktionsblöcke Operations Systems Function (OSF) und Workstation Function (WSF), den als Netzelemente NE ausgebildeten Erzeugnissen der TMN Funktionsblock Network Element Function (NEF) zugeordnet sein.

Das Operations System OS und die Netzelemente NE sind durch ein in der Fachwelt als Data Communication Network (DCN) bezeichnetes Datennetz verbunden, über das z.B. als Qualitäts-/Protokollüberwachungsdaten und/oder Messdaten ausgebildete Daten D_{PM} an die Applikation ILDA übermittelt werden.

Die Netzelemente NE umfassen jeweils zumindest eine Baugruppe BG. In beiden Netzelementen NE können die Daten D_{PM} erhoben und zumindest zeitweise gespeichert werden. Die Daten D_{PM} werden beispielsweise in Datenbanken DB, die auch über mehrere Baugruppen BG verteilt angeordnet sein können, oder in Verzeichnissen LOG gespeichert.

Eine Ausführung der Performance Funktionalität sieht unter Berücksichtigung der Erfindung beispielsweise so aus, dass nachfolgende Aktionen automatisch und ohne manuelle Bedienhandlung z.B. von der Applikation ILDA oder vom Netzelement zur genauen Fehlerursache und Analyse der Qualitätseinschränkung ausgeführt werden:
a) Automatische Erkennung einer Leistungs- bzw. Qualitätsreduzierung auf einer Teilnehmerleitung bereits zum Zeitpunkt der Reduzierung durch Analyse des Fehlerbildes und Korrelation der aktuellen und historischen Alarm- und Ereignis-Meldungen eines Netzelementes NE.
   Leistungs- und Qualitätsreduzierungen können z.B. bei ADSL (Asymmetric Digital Subscriber Line) anhand der folgenden Bedingungen, die meist auch zu einer entsprechenden Alarmierung an das Operations System OS führen, erkannt werden:
   - Absinken der Signal-to-Noise ratio (SNR) unter eine bestimmte, möglichst konfigurierbare Schwelle. Bei einer Erreichung dieser Schwelle wird alamiert, aber es wird noch kein Retraining auf ADSL Ebene initiiert.
   - Überschreitung der Bitfehlerrate (CRC Fehler) über eine bestimmte, möglichst konfigurierbare Schwelle.

   Vorteilhaft wird eine Reduzierung der Leitungsqualität nicht wie früher durch das Bedienpersonal erkannt, sondern automatisch durch das Netzelement NE oder eine Applikation A des Operations Systems OS. Besonders schöne Vorteile ergeben sich, wenn dieser Schritt vom Netzelement NE bewirkt wird, weil dieser Schritt dann auch bei einer Störung des DCN zeitnah zu dem auslösenden Ereignis bewirkt wird.
b) Automatisches Starten der Erfassung und Aufsummierung der als Qualitäts-/Protokollüberwachungsdaten ausgebildeten Daten D_{PM} auf physikalischer und Protokollschicht für die Teilnehmerleitung im Netzelement NE, auf der eine Leistungs- und Qualitätsreduzierung erkannt wurde.
   Alternativ oder zusätzlich: Automatisches Speichern der bei einer Leitungsüberwachung z.B. als Messdaten (bei ADSL z.B. Bits per BIN, SNR per BIN) ausgebildeten Daten D_{PM} innerhalb des Netzelementes NE und/oder unmittelbare Übermittlung an das Operations System OS.
   Vorteilhalft erfolgt die Aufzeichnung der Daten D_{PM} fast zeitgleich mit dem Auftreten der Leistungs- bzw. Qualitätsreduzierung durch das automatische Starten durch eine Applikation A des Operations Systems OS oder durch das Netzelement NE.
   Besonders schön ist, dass die Messdaten auch dann gespeichert werden, wenn die Verbindung zum Operations System OS oder eine maßgebliche Applikation A des Operations Systems OS selbst gestört ist.
c) Zyklische Abfrage der im Netzelement zwischengespeicherten Daten D_{PM} durch die Applikation ILDA zur genauen Fehlerursache und Analyse der Qualitätseinschränkung) für den Fall, dass die Daten D_{PM} nicht von automatisch unmittelbar gesendet werden.
d) Aufzeichnung der Daten in einem Verzeichnis LOG möglichst über einen längeren Zeitraum.
   Vorteil: Über einen längeren Zeitraum werden Qualitäts-/Protokoll- und Leitungs-Überwachungsdaten D_{PM} ermittelt, was die Wahrscheinlichkeit erhöht, die genaue Ursache für die Leistungs- und Qualitätsreduzierung durch die Applikation ILDA zu ermitteln.
e) Automatische Auswertung des Fehlerbildes (Alarm log) ab dem Zeitpunkt der Leistungs- und Qualitätsreduzierung einer Teilnehmerschnittstelle unter Einbeziehung der in dem Verzeichnis LOG gespeicherten Daten D_{PM} (Qualitäts- und Protokollüberwachungsdaten bzw. Messdaten der Leitungsüberwachung) durch Analyse und Korrelation der Daten D_{PM} durch die Applikation ILDA, um die genaue Fehlerursache für die Leistungs- bzw. Qualitätsreduzierung zu erhalten.
   Vorteil: Die Ursachenermittlung für die Leistungs- bzw. Qualitätsreduzierung kann schneller durch die Applikation ILDA ausgeführt werden. Auch bei einer zeitlich nachgeschalteten Störungsmeldung durch den Kunden der Teilnehmerschnittstelle kann auf die Überwachungsdaten zurückgegriffen werden, da erfindungsgemäß die Überwachung der Teilnehmerschnittstelle bzw. die Erfassung der Messdaten der Leitungsüberwachung zu diesem Zeitpunkt automatisch aktiviert wird.
f) Automatisches Deaktivieren der Qualitäts-/Protokoll- und Messdatenerfassung der betroffenen Teilnehmerschnittstelle durch eine der Applikationen A des Operations Systems OS oder durch das Netzelement NE, beispielsweise durch eine - möglichst konfigurierbare - Zeitbegrenzung oder nach einem fixen Zeitraum (z.B. nach 24 Stunden), nachdem die Leistungs- bzw. Qualitätsreduzierung der Teilnehmerschnittstelle nicht mehr gegeben ist.
   Vorteil: Automatische Begrenzung der Menge der Daten D_{PM}, was vor allem für Netzelemente NE mit begrenzte Speicherkapazität ein sehr schöner Vorteil ist.

Mit der Erfindung ist eine Vielzahl von Vorteilen verbunden:
- Bei einer durch die Anwendung A oder durch das Netzelement NE gesteuerten Aktivierung werden nur die relevanten Daten D_{PM} erfasst.
- Die durch fehlende Bedienbarkeit eines Netzelements NE bedingten Kosten werden auf ein Minimum reduziert. Für einen Netzbetreiber ergeben sich durch Reduktion der OPEX (OPerational EXpenses) wirtschaftliche Vorteile.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse /Computerprogrammprodukte verteilt realisiert werden kann.

## Patentansprüche

1. Verfahren zur Ermittlung der Ursache einer Störung, mit
- zumindest einem Erzeugnis (NE), von dem Daten (D_{PM}) ermittelt werden, die Rückschlüsse auf die Ursache der Störung ermöglichen, wobei die Ermittlung der Daten wahlweise aktiviert oder deaktiviert werden kann,
- zumindest einer Diagnoseapplikation (ILDA), von der die Ursache unter Berücksichtigung der Daten ermittelt wird, mit folgenden Schritten:
a) Auftritt der Störung;
b) Erkennen des Auftritts der Störung;
c) Automatische Aktivierung der Ermittlung der Daten infolge des Erkennens des Auftritts der Störung;
d) Übermitteltn der Daten zu der Diagnoseapplikation;
e) Ermittlung der Ursache durch die Diagnoseapplikation.

2. Verfahren nach dem vorstehenden Anspruch,
bei dem die Ermittlung nach Maßgabe eines Kriteriums gestartet wird.

3. Verfahren nach dem vorstehenden Anspruch,
bei dem das Kriterium bei einem als Netzelement eines Kommunikationsnetzes (KN) ausgebildeten Erzeugnis als Absinken einer Signal-to-Noise ratio unter eine bestimmte Schwelle und/oder als Überschreitung der Bitfehlerrate über eine bestimmte Schwelle ausgebildet ist.

4. Verfahren nach dem vorstehenden Anspruch,
bei dem zumindest eine der Schwellen konfigurierbar ist.

5. Verfahren nach dem vorstehenden Anspruch,
bei dem das Erkennen und die Aktivierung von dem Erzeugnis bewirkt werden.

6. Verfahren nach einem der vorstehenden Ansprüche,
bei dem die Daten als Qualitäts-/Protokollüberwachungsdaten und/oder als Messdaten ausgebildet sind.

7. Verfahren nach einem der vorstehenden Ansprüche,
bei dem die Ermittlung der Daten automatisch deaktiviert wird - insbesondere unter Berücksichtigung einer konfigurierbaren Zeitbegrenzung oder nach einem fixen Zeitraum.

8. Erzeugnis, umfassend Mittel zur Durchführung aller Schritte eines Verfahrens nach einem der vorstehenden Verfahrensansprüche.

9. Erzeugnis, umfassend Mittel zur Durchführung der von dem Erzeugnis bewirkten Schritte eines Verfahrens nach einem der vorstehenden Verfahrensansprüche, die so eingerichtet sind, dass durch Zusammenwirkung mit zumindest einem weiteren derartigen Erzeugnis, dessen Mittel zur Durchführung der restlichen Schritte des Verfahrens eingerichtet sind, alle Schritte des Verfahrens durchgeführt werden.

10. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.
